# EUROPÄISCHE PATENTANMELDUNG

(11) **EP 0 677 691 A1**
(43) Veröffentlichungstag der Anmeldung: **18.10.1995**
(21) Anmeldenummer: 95102218.5
(22) Anmeldetag: 17.02.1995
(51) Int. Cl.: F16L 17/06

(54) **Rohrkupplung**

(30) Priorität: 17.03.1994 DE 4409137
(71) Anmelder: ENBI NUTH bv, NL-6361 GZ Nuth (NL)
(72) Erfinder: Hendrickx, Arthur F. L., NL-5575 XC Luyksgestel (NL)
(74) Vertreter: Bauer, Hubert, Dipl.-Ing.

(57) **Zusammenfassung**

Zur hinreichend stabilen Verbindung von Dichtungsringen (2) mit einer eine Rohrkupplung bildende Muffe (1) wird vorgeschlagen, in die Stirnseiten der Muffe (1) jeweils eine Ringnut (3) einzuformen. Diese ist auf ihrer innenseitigen Laibung mit Lücken versehen, welche durch zahnförmige Vorsprünge (5) begrenzt sind. Die Vorsprünge (5) greifen in entsprechend ausgebildete taschenförmige Vertiefungen eines Dichtungsringkragens (6) ein, mit dem im übrigen die Ringnut (3) ausgefüllt ist. Werden die Dichtungsringe (2) axialen Zugkräften in Richtung des Inneren der Muffe (1) ausgesetzt, greifen die zahnförmigen Vorsprünge (5) an der Muffe (1) zunehmend fester in die taschenförmigen Vertiefungen im Dichtungsringkragen (6) ein.

## Beschreibung

Die Erfindung betrifft eine Rohrkupplung in Form einer Muffe, in welche Enden zu verbindender Rohre einschiebbar sind. Dabei sind durch eine Außenseite der Rohre und eine Innenseite der Muffe definierte Ringräume mittels jeweils eines elastischen Dichtungsringes abdichtbar.

Bei derartigen allgemein bekannten Rohrkupplungen neigen die Dichtungsringe dazu, sich beim Einschieben der Rohre in axialer Richtung zum Inneren der Rohrmuffe hin zu verlagern. Dadurch kann das ordnungsgemäße Einschieben der Rohre verhindert und auch die Abdichtungsfunktion der Dichtungsringe vereitelt werden.

Um Rohrkupplungen mit Dichtungsringen auszustatten, die sich beim Einschieben der Rohre nicht verlagern können, ist es an sich bekannt, die Dichtungsringe jeweils mit einem stulpförmigen Außenrand zu versehen, der sich über die Stirnseite und über ein daran anschließendes Teilstück der Muffe außenseitig erstreckt.

Teile eines so ausgebildeten Dichtungsringes stehen zwangsläufig radial über den Außenumfang der Muffe vor. Insbesondere bei Rohren, die durch Erdreichbohrungen preßbar sein sollen, sind Rohrkupplungen mit derartigen Dichtungsringen nicht einsetzbar, weil diese den Vorschub des Rohrstranges erschweren, und dabei zudem der Gefahr von erheblichen Beschädigungen ausgesetzt sind.

Der Erfindung liegt die Aufgabe zugrunde, eine Rohrkupplung vorzuschlagen, deren Dichtungsringe sich stabil fixieren lassen ohne dazu mit Teilbereichen radial über den Außenumfang der Muffen vorzustehen oder zusätzliche Fixiermittel zu erfordern.

Zur Lösung dieser Aufgabe wird von einer Rohrkupplung der im Oberbegriff des Anspruchs 1 genannten Art ausgegangen, welche erfindungsgemäß die in seinem kennzeichnenden Teil angegebenen Merkmale aufweist.

In die erfindungsgemäße Ringnut jeder Stirnseite der Muffe läßt sich ein Dichtungsringkragen einpressen, der infolgedessen nicht über den Außenumfang der Muffe vorsteht. Die Fixierung des Dichtungsringkragens und damit die Fixierung des Dichtungsringes insgesamt wird durch die taschenförmigen Vertiefungen im Dichtungsringkragen, in welche die zahnförmigen Vorsprünge eingreifen, welche die innenseitige Laibung der Ringnut begrenzen, außerordentlich verbessert. Beim Einstecken der Rohre bewirken nämlich die am jeweiligen Dichtungsring angreifenden Axialkräfte, daß sich die muffenseitigen zahnförmigen Vorsprünge zunehmend tiefer in die dichtungsringseitigen Vertiefungen eingraben und somit die Fixierkraft erhöhen.

Der vorbeschriebene Effekt läßt sich noch dadurch steigern, daß nach einer Ausgestaltung der Erfindung die in jeder Stirnseite der Muffe eingeformte Ringnut einen sich konisch zum Nutboden hin verkleinernden Querschnitt aufweist.

Der folglich keilartige Querschnitt der Ringnut führt zu einer zunehmenden Verpressung des in den Ringnutbereich eindringenden Dichtungsringmaterials, womit auch die Fixierung des Dichtungsringes zusätzlich gesteigert wird.

Damit die insbesondere für durch Erdreichbohrungen preßbare Rohre geeignete Rohrkupplung es auch ermöglicht, einen Rohrstrang Rohr um Rohr zu verlängern, und die so gekuppelten Rohre ohne die Gefahr einer relativen axialen Kupplungsverlagerung vorzupressen, sieht eine weitere Ausgestaltung der Erfindung vor, daß mittig in der Muffe ein radial nach innen vorstehender Steg angeformt ist, der beidseitig einen Anschlag für die einander zugewandten Stirnseiten der in die Muffe einschiebbaren Enden der Rohre bildet.

Haben die einander zugewandten Stirnseiten zweier benachbarter Rohre den in der Muffe radial nach innen vorstehenden Steg erreicht, überträgt dieser die Vorschubkraft von Rohr zu Rohr, während die Rohrkupplung daran gehindert ist, sich aus der Kupplungsposition zu verschieben.

Um Abweichungen von einer absolut gradlinig verlaufenden Achse eines Rohrstranges zu kompensieren, ohne dabei Sektoren des Steges entweder zu hoch oder zu gering zu beanspruchen, sieht eine weitere Ausgestaltung der Erfindung vor, daß der Steg auf beiden Seiten mit keilförmigen Vertiefungsrillen und Vorsprungsringen profiliert ist.

Weitere, besonders zweckmäßige Ausgestaltungen der erfindungsgemäßen Rohrkupplung ergeben sich aus den Ansprüchen 5 bis 7.

In der Zeichnung ist ein Ausführungsbeispiel einer erfindungsgemäßen Rohrkupplung dargestellt und nachfolgend näher beschrieben. Es zeigt:

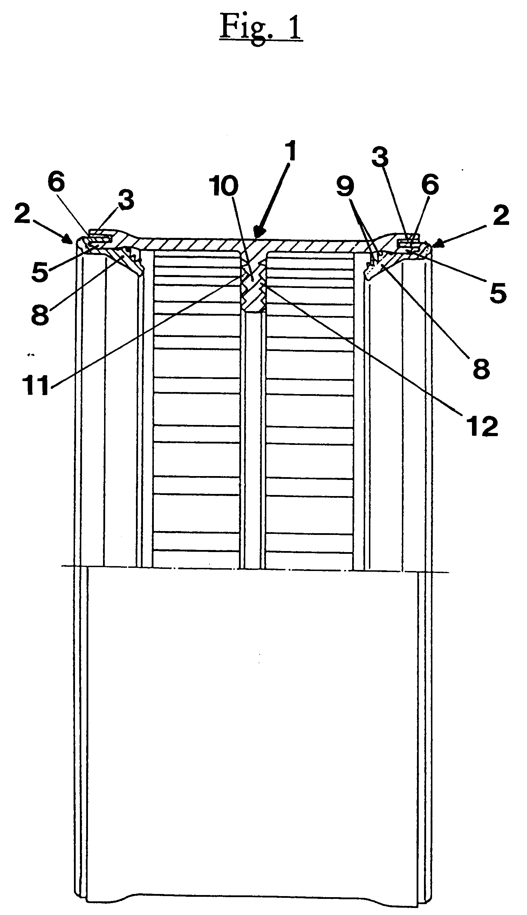

- Fig. 1: die Rohrkupplung mit ihrer oberen Hälfte in einem Axialschnitt und mit ihrer unteren Hälfte in einer Seitenansicht;
- Fig. 2: die Rohrkupplung gemäß Figur 1, jedoch ohne die beiden Dichtungsringe;
- Fig. 3: die Hälfte einer Stirnseite der Rohrkupplung gemäß Figur 2;
- Fig. 4: einen Dichtungsring mit seiner der Rohrkupplung zugewandten Seite;
- Fig. 5: einen Schnitt durch den Dichtungsring nach der Linie V-V der Figur 4.

Die Rohrkupplung besteht insgesamt aus einer Muffe 1 und zwei Dichtungsringen 2. Während die Muffe 1 ein Kunststoffbauteil ist, sind die Dichtungsringe 2 aus Gummi oder einem vergleichbar dauerelastischen Werkstoff gefertigt.

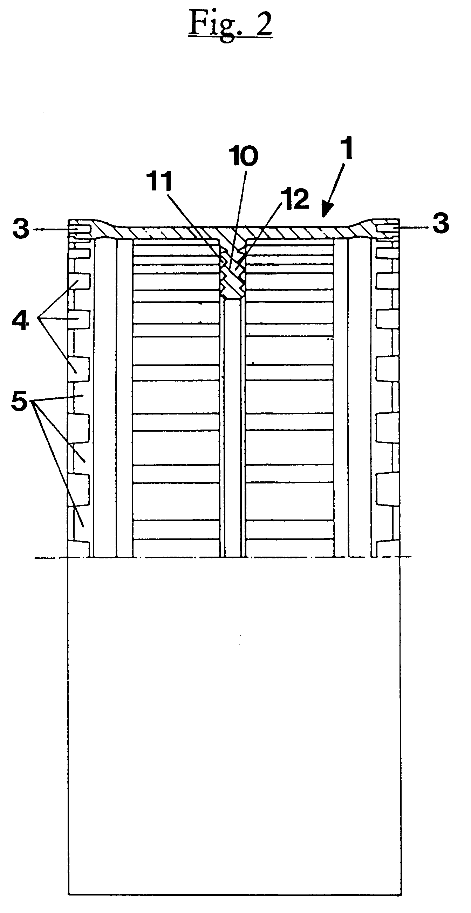

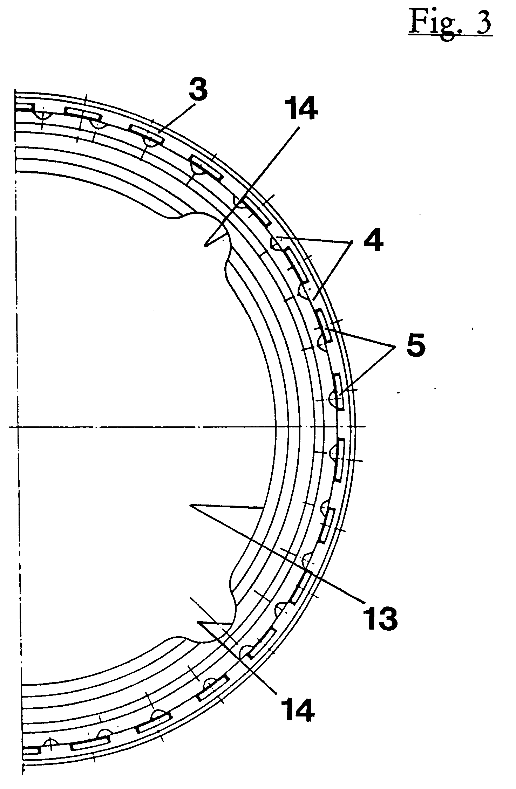

Wie insbesondere die Figuren 2 und 3 veranschaulichen, ist in jeder Stirnseite der Muffe 1 eine Ringnut 3 eingeformt. Diese weist auf ihrer innenseitigen Laibung Lücken 4 auf, die in gleichmäßiger Verteilung über den Umfang der Ringnut 3 angeordnet sind. Die Lücken 4 werden durch ebenso gleichmäßig über den Umfang der Ringnut 3 verteilt angeordnete, zahnförmige Vorsprünge 5 seitlich begrenzt.

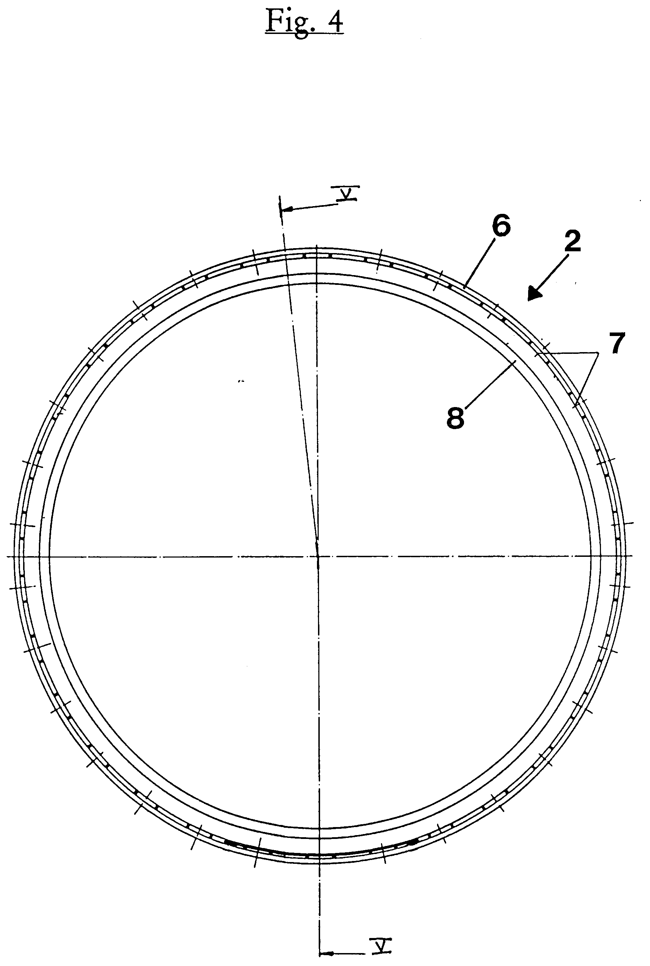

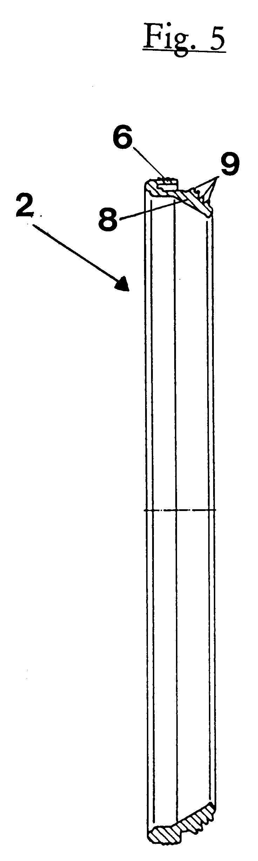

Wie insbesondere die einen der beiden identisch ausgebildeten Dichtungsringe 2 darstellenden Figuren 4 und 5 zeigen, ist der Dichtungsring 2 mit einem axial ausgerichteten Dichtungsringkragen 6 versehen, in dem taschenförmige Vertiefungen 7 eingeformt sind. Diese befinden sich in einem inneren Teil des Dichtungsringkragens 6 und sind axial ausgerichtet. Nach Anzahl, Größe und Anordnung entsprechen die Vertiefungen 7 den Vorsprüngen 5, so daß im montierten Zustand des Dichtungsringes 2 die Vorsprünge 5 der Muffe 1 in den Vertiefungen 7 im Dichtungsring 6 Platz finden.

Am radial inneren Teil des Dichtungsringkragens 6 ist ein elastisch verschwenkbares Manschettenteil 8 angeformt. Dieses ist auf seiner Außenseite mit im Querschnitt sägezahnförmig vorspringenden Ringen 9 profiliert. So wie ein Rohr in die Rohrkupplung eingeschoben wird, verdrängt dieses das Manschettenteil 8 radial nach außen, so daß die Ringe 9 fest gegen die Innenseite der Muffe 1 angepreßt werden.

Mittig in der Muffe 1 ist ein radial nach innen vorstehender Steg 10 angeformt. Dieser bildet beidseitig einen Anschlag für die einander zugewandten Stirnseiten der in die Muffe 1 einzuschiebenden Rohre. Auf beiden Seiten ist der Steg 10 mit keilförmigen Vertiefungsrillen 11 und Vorsprungsringen 12 versehen. An einem Innenrand 13 des Steges 10 sind in gleichmäßiger Verteilung über seinen Umfang Einbuchtungen 14 vorgesehen. Diese ermöglichen es, bei einer über den radialen Stegumfang ungleichmäßigen Beanspruchung des Steges 10, daß sich Stegsegmente unabhängig voneinander begrenzt verbiegen können, ohne im Steg 10 Risse hervorzurufen.

## Patentansprüche

1. Rohrkupplung in Form einer Muffe, in welche Enden zu verbindender Rohre einschiebbar sind und durch eine Außenseite der Rohre und eine Innenseite der Muffe definierte Ringräume mittels jeweils eines elastischen Dichtungsringes abdichtbar sind, dadurch gekennzeichnet, daß in jeder Stirnseite der Muffe (1) eine Ringnut (3) eingeformt ist, deren innenseitige Laibung in gleichmäßiger Verteilung über den Umfang der Ringnut (3) diese radial nach innen öffnende Lücken (4) aufweist, die jeweils durch axial ausgerichtete, zahnförmige Vorsprünge (5) begrenzt sind, und daß in die Ringnut (3) der radial äußere Teil eines axial ausgerichteten Dichtungsringkragens (6) einpreßbar ist, dessen radial innerer Teil mit nach Anzahl und Größe den zahnförmigen Vorsprüngen (5) entsprechenden, axial ausgerichteten, taschenförmigen Vertiefungen (7) versehen ist.

2. Rohrkupplung nach Anspruch 1, dadurch gekennzeichnet, daß die in jeder Stirnseite der Muffe (1) eingeformte Ringnut (3) einen sich konisch zum Nutboden hin verkleinernden Querschnitt aufweist.

3. Rohrkupplung nach Anspruch 1 oder 2, dadurch gekennzeichnet, daß mittig in der Muffe (1) ein radial nach innen vorstehender Steg (10) angeformt ist, der beidseitig einen Anschlag für die einander zugewandten Stirnseiten der in die Muffe (1) einschiebbaren Enden der Rohre bildet.

4. Rohrkupplung nach Anspruch 3, dadurch gekennzeichnet, daß der Steg (10) auf beiden Seiten mit keilförmigen Vertiefungsrillen (11) und Vorsprungsringen (12) profiliert ist.

5. Rohrkupplung nach einem der Ansprüche 1 bis 4, dadurch gekennzeichnet, daß der radial äußere Teil des Dichtungsringkragens (6) auf seiner Außenseite mit im Querschnitt sägezahnförmig vorspringenden Ringen profiliert ist.

6. Rohrkupplung nach einem der Ansprüche 1 bis 5, dadurch gekennzeichnet, daß am radial inneren Teil des Dichtungsringkragens (6) ein elastisch verschwenkbares Manschettenteil (8) angeformt ist, das unter Vorspannung axial ausrichtbar und dabei einerseits gegen die Innenseite der Muffe (1) und andererseits gegen die Außenseite des Rohres anpreßbar ist.

7. Rohrkupplung nach Anspruch 6, dadurch gekennzeichnet, daß die gegen die Außenseite des Rohres anpreßbare Seite des Manschettenteils (8) mit im wesentlichen trapezförmigen und/oder rechteckförmigen Vertiefungsrillen und Vorsprungsringen versehen ist.
